# EUROPÄISCHE PATENTANMELDUNG

(11) **EP 1 026 805 A2**
(43) Veröffentlichungstag der Anmeldung: **09.08.2000**
(21) Anmeldenummer: 00100762.4
(22) Anmeldetag: 15.01.2000
(51) Int. Cl.: H02H 3/04, H02H 3/33

(54) **Fehlerstromschutzschaltungsanordnung**

(30) Priorität: 04.02.1999 DE 19904405
(71) Anmelder: ABB PATENT GmbH, 68309 Mannheim (DE)
(72) Erfinder: Kahl, Walter, Dipl.-Ing., 69190 Walldorf (DE)
(74) Vertreter: Miller, Toivo

(57) **Zusammenfassung**

Es wird eine Fehlerstromschutzschaltungsanordnung beschrieben, die einen Summenstromwandler (10), Netzleiter (R, N) eine Sekundärwicklung (11) und ein Auslöserelais (13), das parallel zur Sekundärwicklung liegt, aufweist. In Reihe mit der Sekundärwicklung (11) befindet sich ein erster Kondensator (12) und parallel zum Auslöserelais (13) ist ein zweiter Kondensator (17) angeordnet. Der Spannungsabfall über dem ersten Kondensator (12) bei Auftreten eines Fehlerstromes in den Netzleitern (R, N) erregt eine Photodiode (19), deren abgestrahltes Licht (20) von einem Phototransistor (21) empfangen und weiter verarbeitet wird.

## Beschreibung

Die Erfindung betrifft eine Fehlerstromschutzschaltungsanordnung nach dem Oberbegriff des Anspruches 1.

Eine solche Fehlerstromschutzschaltungsanordnung besitzt einen Summenstromwandler, dessen Primärwicklung durch die Netzleiter gebildet sind. Der Summenstromwandler enthält eine Sekundärwicklung, die mit einem Auslöserelais verbunden ist, das parallel zur Sekundärwicklung liegt. Im Falle eines Fehlerstromes in den Netzleitern wird bei einer derartigen Anordnung der Fehlerstrom netzspannungsunabhängig erfaßt und auch netzspannungsunabhängig abgeschaltet, indem das Auslöserelais auf ein Schaltschloß zur Öffnung von Netzkontaktstellen einwirkt.

Wenn der Fehlerstromschutzschalter defekt ist, dann besteht die Gefahr, daß bei Auftreten eines Fehlerstromes die Netzkontaktstellen nicht geöffnet werden. Dadurch ist nicht erkennbar, ob ein Fehlerstrom ansteht oder nicht.

Aufgabe der Erfindung ist es daher, eine Fehlerstromschutzschaltunganordnung der eingangs genannten Art zu schaffen, bei der auf einfache Weise erkennbar ist, ob ein Fehlerstrom vorhanden ist oder nicht, unabhängig davon, ob die Fehlerstromschutzschaltungsanordnung anspricht oder nicht.

Diese Aufgabe wird erfindungsgemäß durch die Merkmale des Anspruches 1 gelöst.

Erfindungsgemäß befinden sich in einer Fehlerstromschutzschaltungsanordnung der eingangs genannten Art in Reihe mit der Sekundärwicklung ein erster und parallel zum Auslöserelais ein zweiter Kondensator sowie parallel zum ersten Kondensator ein Lichtsender, deren Ausgangssignale von einer Lichtempfängerschaltung detektierbar sind.

Ein Auslösefehlerstrom einer bestimmten Bemessungshöhe bewirkt auf der Sekundärseite des Summenstromwandlers einen Ausgangsstrom, so daß am ersten Kondensator eine Spannung anliegt, die bei Überschreiten eines bestimmten Wertes den Lichtsender zum Leuchten bringt.

Gemäß einer weiteren Ausführungsform besitzt die Lichtempfängerschaltung einen Phototransistor oder -thyristor, dessen Ausgangssignale eine Anzeige, einen Aktor und dergleichen ansteuern. Mit dem Aktor können die Netzkontaktstücke geöffnet und/oder das Schaltschloß entklinkt werden.

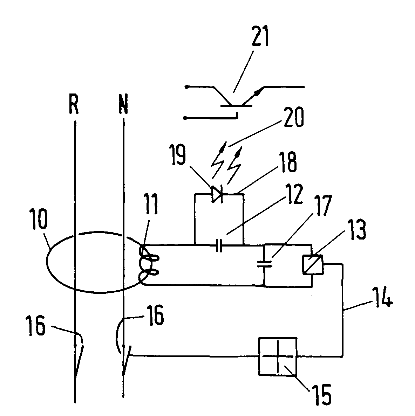

Anhand der Zeichnung, in der ein Ausführungsbeispiel der Erfindung dargestellt ist, sollen die Erfindung sowie weitere vorteilhafte Ausgestaltung und Verbesserungen der Erfindung und weitere Vorteile näher erläutert und beschrieben werden.

Es zeigt die einzige Figur eine erfindungsgemäße Schaltungsanordnung.

Die Fehlerstromschutzschaltungsanordnung besitzt einen Summenstromwandler 10, dessen Primärwicklung durch die beiden Netzleiter R und N gebildet sind. Der Summenstromwandler 10 besitzt weiterhin eine Sekundärwicklung 11, zu der in Reihe ein Kondensator 12 sowie parallel ein Auslöserelais 13 geschaltet sind, welches Auslöserelais 13 über eine Wirklinie 14 ein Schaltschloß 15 entklinkt, so daß Kontaktstellen 16 in den Netzleitern R, N geöffnet bzw. betätigt werden. Parallel zum Auslöserelais 13 befindet sich ein zweiter Kondensator 17, wobei der zweite Kondensator mit einem Anschluß zwischen dem ersten Kondensator 12 und dem Auslöserelais 13 liegt.

Parallel zum ersten Kondensator 12 ist ein Nebenkreis 18 geschaltet, der eine Photodiode 19 enthält, deren Lichtsignale 20 von einem Photodetektor 21 detektiert werden.

Wenn die Primärleiter R, N oder die Netzleiter R, N einen Fehlerstrom führen, wird in der Sekundärwicklung 11 eine Spannung induziert, die das Auslöserelais 13 ansteuert, so daß die Schaltkontakte über das Schaltschloß 15 geöffnet werden.

Bei Auftreten eines Stromes in der Sekundärwicklung 11 erhält man am ersten Kondensator 12 einen Spannungsabfall, der die Photodiode 19 zum Leuchten bringt; das von der Photodiode 19 abgestrahlte Licht 20 wird von dem Lichtempfänger 21 detektiert, so daß am Ausgang des Lichtempfängers oder Optokopplers 21 ein Signal zur Weitermeldung oder zur Ansteuerung eines Aktors zur Verfügung steht. Dieser Aktor kann z. B. ein Arbeitsstromrelais oder eine auf das Schaltschloß wirkende Formgedächtnislegierung sein.

Damit kann detektiert werden, ob ein Fehlerstrom vorhanden ist oder nicht, denn die Photodiode emittiert auch dann Licht 20, wenn der Auslöser 13 nicht ausgelöst haben sollte.

Der Lichtempfänger 21, der ein Phototransistor oder Photothyristor sein kann, wobei die Schaltungsanordnung zur Bildung eines Lichtempfängers 21 an sich bekannt sind. Ggf. kann dem einen Phototransistor ein weiterer Transistor zugeordnet werden, um eine Verstärkung zu erzielen.

## Patentansprüche

1. Fehlerstromschutzschaltungsanordnung mit einem Summenstromwandler (10), dessen Primärwicklung die Netzleiter (R, N) sind, mit einer Sekundärwicklung (11), und mit einem Auslöserelais (13), das parallel zur Sekundärwicklung (11) liegt, wobei das Auslöserelais (13) ein Schaltschloß (15) entklinkt, das Netzkontaktstellen (16) bleibend öffnet, dadurch gekennzeichnet, daß in Reihe mit der Sekundärwicklung (11) ein erster Kondensator (12) und parallel zum Auslöserelais (13) ein zweiter Kondensator (17) geschaltet sind, und daß parallel zum ersten Kondensator (12) ein Lichtsender (19) geschaltet ist, der bei Auftreten einer Spannung über den ersten Kondensator Lichtsignale abgibt, die von einer Lichtempfängerschaltung (21) detektierbar sind.

2. Fehlerstromschutzschaltungsanordnung nach Anspruch 1, dadurch gekennzeichnet, daß der Lichtsender (19) eine Photodiode ist.

3. Fehlerstromschutzschaltungsanordnung nach Anspruch 1 oder 2, dadurch gekennzeichnet, daß die Lichtempfängerschaltung einen Phototransistor (21) oder -thyristor aufweist, dessen Ausgangssignale ein Anzeige, einen Aktor, der die Netzkontkatstellen (16) direkt oder durch Entklinkung des Schaltschlosses (15) bleibend öffnet, und dgl. ansteuern.
